# EUROPEAN PATENT APPLICATION

(11) **EP 4 813 725 A1**
(43) Date of publication of application: **30.09.2026**
(21) Application number: 26161162.8
(22) Date of filing: 27.02.2026
(51) Int. Cl.: B60L 15/20, B60L 3/00, B60L 3/12, B60W 30/20

(54) **VEHICLE WITH IMPROVED BACKLASH ELIMINATION**

(30) Priority: 28.03.2025 JP 2025054942
(71) Applicant: MAZDA MOTOR CORPORATION, Hiroshima 730-8670 (JP)
(72) Inventor: Ishiyama, Yuki, Aki-gun, Hiroshima, 730-8670 (JP); Tanaka, Kenji, Aki-gun, Hiroshima, 730-8670 (JP)
(74) Representative: Lorenz Seidler Gossel Part. mbB

(57) **Abstract**

The invention proposes a vehicle including a motor (2) that generates torque for driving a vehicle, a power transmission mechanism (4) configured to transmit the torque of the motor (2) to a driving wheel (5) of the vehicle through a plurality of gears, an accelerator opening degree sensor (SN1) that detects an accelerator opening degree, and a control device (20) configured to calculate a target torque that should be generated from the motor (2) on the basis of at least the accelerator opening degree and control the motor (2) on the basis of the target torque. The control device (20) calculates a predicted backlash angle of the gears of the power transmission mechanism (4) after a predetermined time when the vehicle switches from a deceleration state to an acceleration state, and temporarily reduces the target torque when the predicted backlash angle becomes equal to a predetermined angle.

## Description

### [Technical Field]

The present invention relates to a vehicle that performs control for backlash elimination in gears of a power transmission mechanism present between a drive source and a driving wheel.

### [Background Art]

A technique of this type is described, for example, in JP 2017-192248 A. JP 2017-192248 A describes a technique that can accelerate the response of drive shaft torque in a gear backlash section (i.e., during backlash elimination in gears of a power transmission mechanism) even when a target torque command value gradually increases in a situation in which a vehicle gradually accelerates from coasting or deceleration. Specifically, in this technique, a final torque command value is calculated on the basis of a drive shaft torsional angular velocity multiplied by a first feedback gain and a drive shaft torsion angle multiplied by a second feedback gain, and a motor is controlled in accordance with this final torque command value.

### [Summary of Invention]

### [Problem to be Solved by the Invention]

When a vehicle transitions from deceleration to acceleration, backlash elimination will be performed in a plurality of gears (e.g., a differential gear and a final gear) in a power transmission mechanism present between a motor (drive source) and a driving wheel. At this time, the power transmission mechanism switches from a state in which gear backlash is eliminated to the driving wheel side to a state in which gear backlash is eliminated to the motor side.

When the vehicle transitions from deceleration to acceleration as described above, shock (in this specification, the word "shock" is used, including vibration and abnormal noise) may occur during the backlash elimination in the gears of the power transmission mechanism. In order to reduce such shock during the backlash elimination, a possible method is to obtain the timing of completion of the backlash elimination from the state of the backlash angle of the gears of the power transmission mechanism, and to reduce the torque of the motor at this timing. However, with this method, there is a case in which due to a time delay from when a command is issued to the motor to reduce the torque to when the torque of the motor is actually reduced, the reduction in the torque does not occur in time for the timing of the completion of the backlash elimination and the shock during the backlash elimination cannot be reduced. The cause of such a time delay in the motor can be a communication delay (a communication delay of a CAN or the like) between a control device of the motor, and an inverter and the motor, for example.

Note that although a problem that arises when a vehicle transitions from deceleration to acceleration has been described above, a problem similar to this also arises when a vehicle transitions from acceleration to deceleration.

The present invention has been made to solve the problem in the conventional technique described above, and an object thereof is to provide a vehicle control system that can reliably reduce shock during backlash elimination in gears of a power transmission mechanism when a vehicle transitions from deceleration to acceleration or from acceleration to deceleration.

### [Means for Solving the Problem]

In order to achieve the object described above, the present invention is a vehicle including: a motor that generates torque for driving a vehicle; a power transmission mechanism configured to transmit the torque of the motor to a driving wheel of the vehicle through a plurality of gears; an accelerator opening degree sensor that detects an accelerator opening degree, the accelerator opening degree being an amount of operation on an accelerator pedal of the vehicle; and a control device configured to calculate a target torque that should be generated from the motor on the basis of at least the accelerator opening degree and control the motor on the basis of the target torque, characterized in that the control device is configured to calculate a predicted backlash angle of the gears of the power transmission mechanism after a predetermined time when the vehicle switches from a deceleration state to an acceleration state, and temporarily reduce the target torque when the predicted backlash angle becomes equal to a predetermined angle. In an embodiment, the vehicle further comprises a vehicle speed sensor that detects a vehicle speed, and/or a motor speed sensor that detects a motor speed, wherein the control device is configured to calculate the target torque on the basis of at least the accelerator opening degree and the vehicle speed and/or the motor speed.

In the present invention configured in this manner, when the vehicle transitions from deceleration to acceleration, the predicted backlash angle of the gears of the power transmission mechanism after the predetermined time is calculated, and the target torque is temporarily reduced when the predicted backlash angle becomes equal to the predetermined angle. By reducing the target torque on the basis of such a predicted backlash angle, it is possible to issue a command to reduce the torque of the motor at an appropriate timing in advance. Thus, when the vehicle transitions from deceleration to acceleration, it is possible to appropriately reduce the actual torque of the motor at the timing when the backlash elimination in the gears of the power transmission mechanism is completed and reliably reduce the shock during the backlash elimination.

In the present invention, preferably, the control device is configured to perform a correction for increasing the target torque before the predicted backlash angle becomes equal to the predetermined angle and temporarily reduce the corrected target torque when the predicted backlash angle becomes equal to the predetermined angle.

According to the present invention configured in this manner, by performing a correction for increasing the target torque, it is possible to shorten the time for the backlash elimination and improve acceleration response.

In the present invention, preferably, the control device is configured to increase the target torque after the target torque is temporarily reduced.

According to the present invention configured in this manner, it is possible to promptly accelerate the vehicle after the completion of the backlash elimination.

In the present invention, preferably, the control device is configured to calculate a collision force when backlash in the gears of the power transmission mechanism is eliminated on the basis of a rotational speed and an inertia of the motor, and when the collision force is equal to or larger than a predetermined value, to temporarily reduce the target torque when the predicted backlash angle becomes equal to the predetermined angle.

According to the present invention configured in this manner, it is possible to perform control that temporarily reduces the torque only when the collision force when the backlash in the gears is eliminated is relatively large, that is, only when the shock during the backlash elimination is problematic.

In another aspect, the present invention is a vehicle including: a motor that generates torque for driving a vehicle; a power transmission mechanism configured to transmit the torque of the motor to a driving wheel of the vehicle through a plurality of gears; an accelerator opening degree sensor that detects an accelerator opening degree, the accelerator opening degree being an amount of operation on an accelerator pedal of the vehicle; and a control device configured to calculate a target torque that should be generated from the motor on the basis of at least the accelerator opening degree and control the motor on the basis of the target torque, characterized in that the control device is configured to calculate a predicted backlash angle of the gears of the power transmission mechanism after a predetermined time when the vehicle switches from an acceleration state to a deceleration state, and temporarily increase the target torque when the predicted backlash angle becomes equal to a predetermined angle. In an embodiment, the vehicle further comprises a vehicle speed sensor that detects a vehicle speed, and/or a motor speed sensor that detects a motor speed, wherein the control device is configured to calculate the target torque on the basis of at least the accelerator opening degree and the vehicle speed and/or the motor speed.

According to the present invention configured in this manner, when the vehicle transitions from acceleration to deceleration, it is possible to appropriately increase the actual torque of the motor at the timing when the backlash elimination in the gears of the power transmission mechanism is completed and reliably reduce the shock during the backlash elimination.

In the present invention, preferably, the control device is configured to perform a correction for reducing the target torque before the predicted backlash angle becomes equal to the predetermined angle and temporarily increase the corrected target torque when the predicted backlash angle becomes equal to the predetermined angle.

According to the present invention configured in this manner, by performing the correction for reducing the target torque, it is possible to shorten the time for the backlash elimination and improve deceleration response.

In the present invention, preferably, the control device is configured to reduce the target torque after the target torque is temporarily increased.

According to the present invention configured in this manner, it is possible to promptly decelerate the vehicle after the completion of the backlash elimination.

In the present invention, preferably, the control device is configured to calculate a collision force when backlash in the gears of the power transmission mechanism is eliminated on the basis of a rotational speed and an inertia of the motor, and when the collision force is equal to or larger than a predetermined value, to temporarily increase the target torque when the predicted backlash angle becomes equal to the predetermined angle.

According to the present invention configured in this manner, it is possible to perform control that temporarily increases the torque only when the collision force when the backlash in the gears is eliminated is relatively large, that is, only when the shock during the backlash elimination is problematic.

In the present invention, preferably, the control device is configured to calculate the predicted backlash angle on the basis of transitions in a torsion angle of a drive shaft to which the driving wheel is coupled and in the target torque.

According to the present invention configured in this manner, it is possible to accurately calculate the predicted backlash angle of the gears of the power transmission mechanism.

In the present invention, preferably, the predetermined time used to calculate the predicted backlash angle is defined on the basis of a time delay from when the control device issues a command for generating the target torque to the motor (including an inverter) to when the motor actually generates the target torque.

By reducing or increasing the target torque on the basis of the predicted backlash angle defined by such a predetermined time, it is possible to reliably reduce or increase the actual torque of the motor at the timing when the backlash elimination is completed.

### [Advantageous Effect of Invention]

According to the vehicle according to the present invention, it is possible to reliably reduce shock during backlash elimination in the gears of the power transmission mechanism when the vehicle transitions from deceleration to acceleration or from acceleration to deceleration.

### [Brief Description of Drawings]

FIG. 1 is a schematic configuration diagram of a vehicle according to an embodiment of the present invention.
FIG. 2 is a block diagram showing an electrical configuration of the vehicle according to the embodiment of the present invention.
FIG. 3 is a time chart showing backlash elimination control according to the embodiment of the present invention.
FIG. 4 is a flowchart showing the backlash elimination control according to the embodiment of the present invention.
FIG. 5 is a time chart showing backlash elimination control according to a modification of the present invention.

### [Mode for Carrying Out the Invention]

A vehicle according to an embodiment of the present invention will be described below with reference to the accompanying drawings.

### [System Configuration]

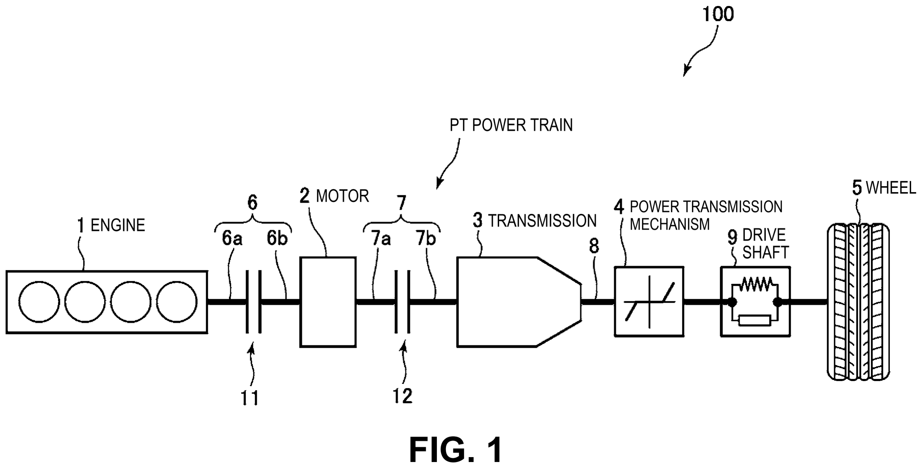

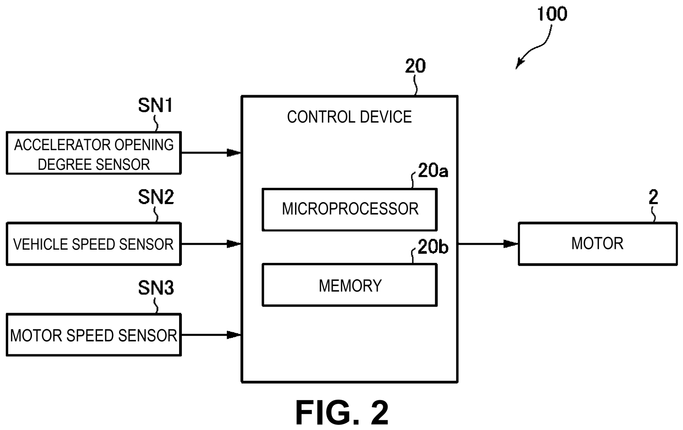

First, the configuration of the vehicle according to the present embodiment will be described with reference to FIGS. 1 and 2. FIG. 1 is a configuration diagram schematically showing the vehicle according to the present embodiment, and FIG. 2 is a block diagram showing the electrical configuration of the vehicle according to the present embodiment.

As shown in FIG. 1, a vehicle control system 100 is applied to a vehicle (a hybrid vehicle) including an engine (an internal combustion engine) 1 and a motor 2 as a powertrain PT. In the vehicle having vehicle control system 100, the motor 2 is disposed at a position downstream of the engine 1 on a power transmission path of the vehicle, a transmission 3 is disposed at a position downstream of the motor 2, and a power transmission mechanism 4 that transmits torque (driving force) for driving the vehicle is disposed at a position downstream of the transmission 3. For example, the transmission 3 is an automatic transmission to which a torque converter with a lock-up clutch is applied.

Specifically, an output shaft of the engine 1 and a rotation shaft of the motor 2 are coaxially coupled by a shaft 6 through a first clutch 11, which can be engaged and disengaged. The first clutch 11 is composed of, for example, a dry multiple disc clutch or a wet multiple disc clutch that can change the transmission torque capacity by controlling the clutch working oil flow rate and/or the clutch working oil pressure continuously or in stages using a motor or a solenoid (not shown). An upstream end of the first clutch 11 is coupled to the output shaft of the engine 1 through a shaft portion 6a, and a downstream end of the first clutch 11 is coupled to an upstream end of the rotation shaft of the motor 2 through a shaft portion 6b. Note that a flywheel having a predetermined weight may be provided at the shaft portion 6a.

In addition, the rotation shaft of the motor 2 and a rotation shaft of the transmission 3 are coaxially coupled by a shaft 7 through a second clutch 12 that can be engaged and disengaged. As with the first clutch 11, the second clutch 12 is composed of, for example, a dry multiple disc clutch or a wet multiple disc clutch that can change the transmission torque capacity by controlling the clutch working oil flow rate and/or the clutch working oil pressure continuously or in stages using a motor or a solenoid (not shown). An upstream end of the second clutch 12 is coupled to a downstream end of the rotation shaft of the motor 2 through a shaft portion (first shaft portion) 7a, and a downstream end of the second clutch 12 is coupled to the rotation shaft of the transmission 3 through a shaft portion (second shaft portion) 7b. Note that the second clutch 12 only needs to be at least capable of allowing and interrupting the transmission of torque between the motor 2 and the transmission 3, and may be formed inside the transmission 3.

In addition, torque is input to the power transmission mechanism 4 through the output shaft 8 of the transmission 3, and the power transmission mechanism 4 transmits this torque to a wheel (driving wheel) 5 through a drive shaft 9. The power transmission mechanism 4 includes a plurality of gears such as a differential gear that distributes the torque to a pair of left and right wheels 5 and a final gear, from the transmission 3 to the drive shaft 9. The shaft 6, the shaft 7, the output shaft 8, and the drive shaft 9 are all formed to be torsionally deformable, and the drive shaft 9 in particular has a characteristic that can be modeled using a spring mass model.

Next, as shown in FIG. 2, the vehicle control system 100 according to the present embodiment further includes a control device 20 that is composed of a circuit and based on a well-known microcomputer. The control device 20 includes one or more processors 20a as a central processing unit (CPU) that executes programs, a memory 20b that is composed of, for example, a random access memory (RAM) or a read only memory (ROM) and stores programs and data, an input/output bus that inputs and outputs electric signals, and the like. For example, the control device 20 is composed of an electronic control unit (ECU).

Signals from an accelerator opening degree sensor SN1 that detects an accelerator opening degree, which is the amount of operation on an accelerator pedal by the driver, a vehicle speed sensor SN2 that detects a vehicle speed, and a motor speed sensor SN3 that detects the rotational speed of the motor 2 are mainly input to the control device 20, and the control device 20 outputs a control signal to control the motor 2 on the basis of these signals. Basically, the control device 20 calculates a target torque that should be generated from the motor 2 on the basis of at least the accelerator opening degree, and controls the motor 2 on the basis of the target torque. In particular, in the present embodiment, when the vehicle transitions from deceleration to acceleration, the control device 20 controls the torque of the motor 2 for backlash elimination in the gears in the power transmission mechanism 4 (backlash elimination control), specifically, controls the torque of the motor 2 to achieve shock reduction and acceleration response improvement during the backlash elimination. Note that the control device 20 starts the backlash elimination control basically in accordance with the accelerator operation by the driver, preferably further using a request from advanced driver-assistance systems (ADAS).

Note that although FIG. 1 shows an example in which the present invention is applied to the hybrid vehicle including the engine 1 and the motor 2 as motive power sources, the present invention is also applicable to an electric vehicle that is not equipped with the engine 1 and includes only the motor 2 as a motive power source.

### [Backlash Elimination Control]

Next, the backlash elimination control performed by the control device 20 in the present embodiment will be described. In the present embodiment, when the vehicle transitions from deceleration to acceleration, the control device 20 temporarily reduces the torque of the motor 2 at the timing when the backlash elimination is completed in order to reduce shock generated during backslash elimination in the gears of the power transmission mechanism 4. By temporarily reducing the torque at the timing when the backlash elimination is completed in this manner, it is possible to cancel out the shock during the backlash elimination, that is, cancel out a collision force when the backlash in the gears is completely eliminated (hereinbelow, referred to as "backlash elimination collision force").

It can be said that, in order to achieve the control described above, the timing of completion of the backlash elimination can be obtained from the state of the backlash angle of the gears of the power transmission mechanism 4, and the torque of the motor 2 can be reduced at this timing. However, there is a case in which due to a time delay from when a command is issued to the motor 2 to reduce the torque to when the torque of the motor 2 is actually reduced, the reduction in the torque does not occur in time for the timing of the completion of the backlash elimination, and the shock during the backlash elimination cannot be reduced. Examples of the cause of this time delay include a communication delay (a communication delay of a CAN or the like) between the control device 20 and the motor 2 (including an inverter), and a time delay from when the motor 2 receives the command to when the motor 2 actually outputs the torque.

Thus, in the present embodiment, the control device 20 calculates a predicted backlash angle of the gears of the power transmission mechanism 4 after a predetermined time, and temporarily reduces the target torque for controlling the motor 2 when the predicted backlash angle becomes equal to a predetermined angle (e.g., corresponding to the backlash angle immediately before the backlash elimination is completed). The predicted backlash angle is not the current backlash angle of the gears of the power transmission mechanism 4, but the backlash angle at a later point in time corresponding to the time delay described above (i.e., the backlash angle obtained by shifting the current backlash angle forward by this time). By reducing the target torque on the basis of such a predicted backlash angle, it is possible to issue the command to reduce the torque of the motor 2 at an appropriate timing in advance. As a result, it is possible to appropriately reduce the actual torque of the motor 2 at the timing when the backlash elimination is completed and reliably reduce the shock during the backlash elimination.

Here, in the present embodiment, the control device 20 calculates (estimates) the torsion angle of the drive shaft 9 and the backlash angle of the gears of the power transmission mechanism 4 using a model capable of estimating various states of a drive system (including at least the power transmission mechanism 4 and the drive shaft 9) on the basis of the input torque. Specifically, the control device 20 calculates the torsion angle of the drive shaft 9 and the current backlash angle (hereinbelow, referred to as an "estimated backlash angle") using the torque (target torque) of the motor 2, a traveling resistance and the like as inputs, and further using the motor speed for addressing a model error. The control device 20 then controls (F/B control) the torque of the motor 2 at least during the backlash elimination in the gears on the basis of the torsion angle and the backlash angle. Furthermore, in the present embodiment, the control device 20 calculates the predicted backlash angle of the gears of the power transmission mechanism 4 after the predetermined time on the basis of transitions (temporal changes) in the torsion angle of the drive shaft 9 and the target torque of the motor 2. Then, as described above, the control device 20 temporarily reduces the target torque when the predicted backlash angle becomes equal to the predetermined angle.

Note that calculating the torsion angle of the drive shaft 9 is not a limitation, and the torsion angle of the drive shaft 9 may be detected by a sensor.

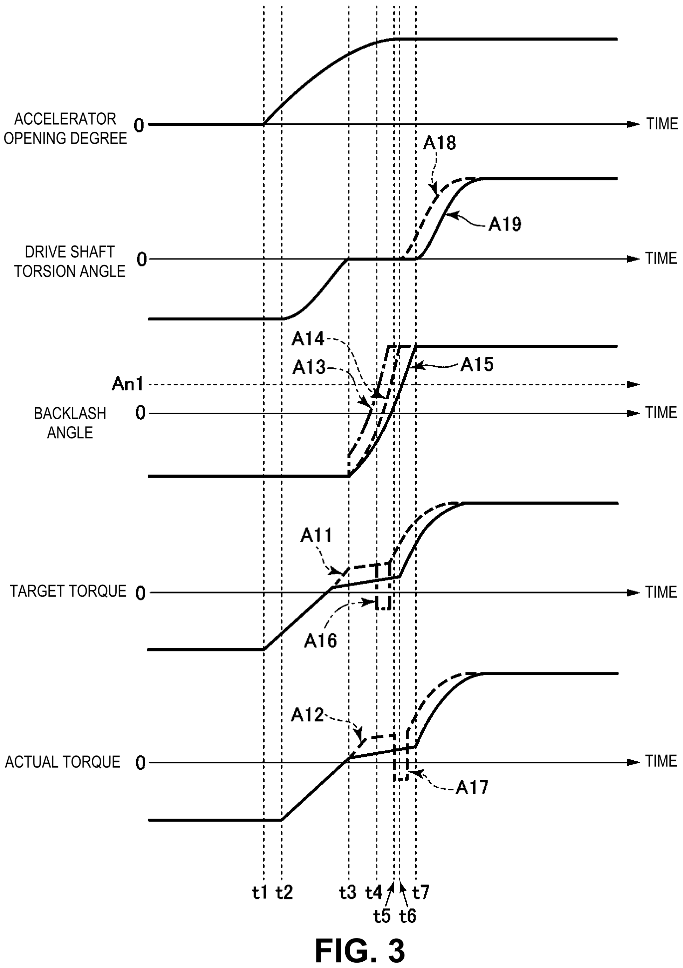

Next, a time chart showing the backlash elimination control according to the present embodiment will be described with reference to FIG. 3. FIG. 3 shows, from top to bottom, the accelerator opening degree, the torsion angle of the drive shaft 9, the backlash angle of the gears of the power transmission mechanism 4 (combined backlash in the plurality of gears), the target torque of the motor 2, and the actual torque of the motor 2. Note that, in FIG. 3, a solid line indicates a temporal change in each parameter in basic backlash elimination control (partially including the backlash elimination control according to the present embodiment), and a dashed line and a dot-dash line indicate temporal changes in characteristic parameters in the backlash elimination control according to the present embodiment. In particular, the dot-dash line indicates the predicted backlash angle and the temporarily reduced target torque.

First, at time t1, the accelerator opening degree begins to increase and the target torque begins to increase along with it, and at time t2 immediately thereafter, the actual torque begins to increase. Then, at time t3, backlash elimination in the gears of the power transmission mechanism 4 starts, that is, the backlash angle begins to change, and the torsion angle of the drive shaft 9 becomes zero during this change in the backlash angle. In the present embodiment, in order to apply a relatively large torque during the backlash elimination to shorten the time for the backlash elimination, a correction for increasing the target torque is performed immediately before time t3 when the backlash elimination starts (arrow A11) such that the actual torque will be increased at time t3 (arrow A12). Specifically, a correction for raising the level of the target torque overall by a predetermined torque (raises the base) is performed. According to the present embodiment with the target torque corrected in this manner, the change speed of the backlash angle becomes faster than that in a case in which the target torque is not corrected (hereinbelow, referred to as a "comparative example") (refer to arrow A14 for the present embodiment and arrow A15 for the comparative example).

In addition, in the present embodiment, from time t3, the predicted backlash angle of the gears of the power transmission mechanism 4 after the predetermined time (e.g., 10 to 50 ms later) is calculated (arrow A13) on the basis of transitions in the torsion angle of the drive shaft 9 and in the target torque. Then, at time t4, when the predicted backlash angle reaches a predetermined angle An1 (a backlash angle relatively close to backlash elimination completion), the target torque is temporarily reduced, specifically, the target torque is reduced in a pulsed manner (arrow A16). For example, an amount of reduction and a reduction time of the target torque are set on the basis of the inertia of the motor 2 and the current motor speed such that the motor speed (rotational speed) when the backlash in the gears is eliminated will be temporarily brought to zero.

When the target torque is temporarily reduced at time t4 as described above, the actual torque also temporarily decreases at time t5 thereafter (arrow A17). Accordingly, at time t6 when the backlash elimination is completed (at this point, the actual backlash angle (arrow A14) becomes maximum), the actual torque is in a reduced state. As a result, the shock during the backlash elimination is reduced. In addition, in the present embodiment, at this time t6, the torsion angle of the drive shaft 9 increases (arrow A18) because the backlash elimination is completed. On the other hand, in the comparative example, at time t7 after time t6, the torsion angle of the drive shaft 9 increases (arrow A19). Thus, according to the present embodiment, it can be said that the time for the backlash elimination is shorter and the acceleration response is higher than in the comparative example.

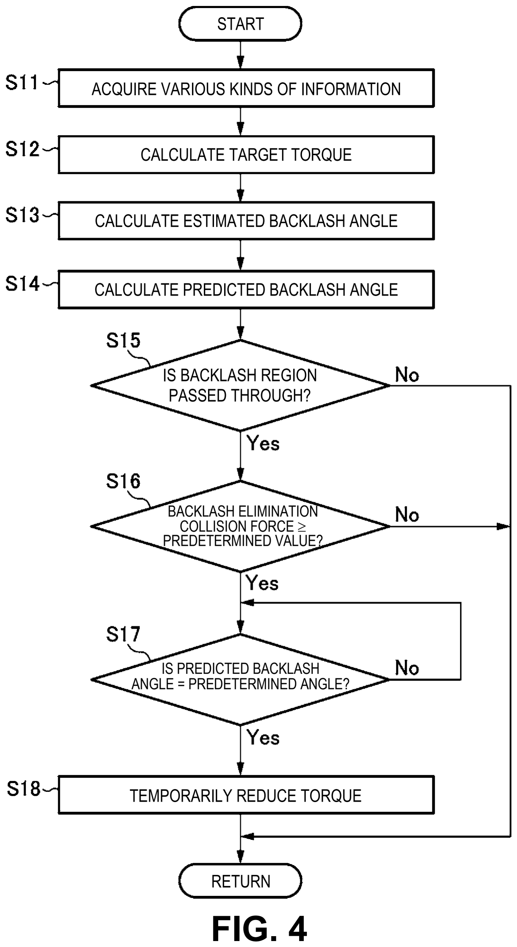

Next, a flowchart showing the backlash elimination control according to the present embodiment will be described with reference to FIG. 4. This flow is repeatedly executed by the control device 20 in a predetermined cycle. Specifically, the processor 20a in the control device 20 reads a program stored in the memory 20b and executes the program to implement the control related to the flow.

First, in step S11, the control device 20 acquires various kinds of information in the vehicle control system 100. In particular, the control device 20 acquires the accelerator opening degree detected by the accelerator opening degree sensor SN1, the vehicle speed detected by the vehicle speed sensor SN2, and the motor speed detected by the motor speed sensor SN3.

Next, in step S12, the control device 20 calculates a target torque that should be generated from the motor 2 on the basis of the accelerator opening degree, the vehicle speed, and the like acquired in step S11. For example, the control device 20 determines a target acceleration corresponding to the current accelerator opening degree and the current vehicle speed using, for example, a map defined by the accelerator opening degree and the vehicle speed, and calculates a target torque for achieving the target acceleration. Preferably, the control device 20 calculates a target jerk such that the acceleration will be smoothly changed in accordance with the change speed of the accelerator opening degree, and calculates the target torque on the basis of the target jerk in addition to the target acceleration.

Next, in step S13, the control device 20 calculates the estimated backlash angle of the gears of the power transmission mechanism 4 using the model capable of estimating the various states of the drive system described above. Specifically, the control device 20 calculates the estimated backlash angle and calculates the torsion angle of the drive shaft 9 using the torque (target torque) of the motor 2, the traveling resistance, and the like as inputs, taking into consideration the behavior of the current motor speed (acquired in step S11) to address a model error.

Next, in step S14, the control device 20 calculates the predicted backlash angle of the gears of the power transmission mechanism 4 after the predetermined time. Specifically, the control device 20 calculates the predicted backlash angle after the predetermined time on the basis of transitions (temporal changes) in the torsion angle of the drive shaft 9 and the target torque. The predetermined time used to calculate the predicted backlash angle is defined on the basis of a time delay (e.g., including a communication delay of the CAN or the like) from when the control device 20 issues a command for generating the target torque to the motor 2 to when the motor 2 actually generates the target torque. For example, 10 to 50 ms is applied to the predetermined time.

Next, in step S15, the control device 20 determines whether a backlash region of the gears of the power transmission mechanism 4 is passed through. In particular, the control device 20 determines the passage through the backlash region from the deceleration side to the acceleration side. Specifically, the control device 20 performs such determination in step S15 by determining whether the target torque is going to cross 0 (N) from this time (determining whether the target torque is going to cross zero in the direction from negative to positive), on the basis of a change in the target torque calculated in step S12 up to this time. As a result of step S15, when the control device 20 determines that the backlash region is passed through (step S15: Yes), the control device 20 proceeds to step S16, and when the control device 20 does not determine that the backlash region is passed through (step S15: No), the control device 20 exits the flow.

Next, in step S16, the control device 20 determines whether the collision force (backlash elimination collision force) when the backlash in the gears of the power transmission mechanism 4 is completely eliminated is equal to or larger than a predetermined value. Here, the control device 20 determines whether a relatively large backlash elimination shock that requires temporarily reducing the torque of the motor 2 to address it occurs. In addition, the control device 20 calculates the backlash elimination collision force on the basis of the inertia of the motor 2 and the motor speed. As a result of step S16, when the control device 20 determines that the backlash elimination collision force is equal to or larger than the predetermined value (step S16: Yes), the control device 20 proceeds to step S17 to temporarily reduce the torque of the motor 2 thereafter. On the other hand, when the control device 20 does not determine that the backlash elimination collision force is equal to or larger than the predetermined value (step S16: No), that is, when the backlash elimination collision force is less than the predetermined value, the control device 20 exits the flow since it is not necessary to temporarily reduce the torque of the motor 2.

Next, in step S17, the control device 20 determines whether the predicted backlash angle calculated in step S14 has reached the predetermined angle An1. A backlash angle relatively close to backlash elimination completion is applied to the predetermined angle An1, and an angle that enables the backlash elimination shock to be appropriately canceled out by reducing the torque at this angle is set in advance. As a result of step S17, when the control device 20 determines that the predicted backlash angle has reached the predetermined angle An1 (step S17: Yes), the control device 20 proceeds to step S18. On the other hand, when the control device 20 does not determine that the predicted backlash angle has reached the predetermined angle An1 (step S17: No), the control device 20 returns to step S17. In this case, the control device 20 repeats the determination in step S17 until the predicted backlash angle reaches the predetermined angle An1.

Next, in step S18, the control device 20 temporarily reduces the target torque, specifically, reduces the target torque in a pulsed manner to reduce the shock during the backlash elimination. For example, the control device 20 temporarily reduces the target torque by the amount of reduction and for the reduction time (in one example, 10 to 20 ms), which are set in advance.

### [Action and Effects]

Next, the action and effects of the vehicle control system 100 according to the present embodiment will be described. According to the present embodiment, while the control device 20 calculates the target torque on the basis of at least the accelerator opening degree and controls the motor 2 on the basis of the target torque, the control device 20 calculates the predicted backlash angle of the gears of the power transmission mechanism 4 after the predetermined time when the vehicle switches from a deceleration state to an acceleration state, and temporarily reduces the target torque when the predicted backlash angle becomes equal to the predetermined angle An1. By reducing the target torque on the basis of such a predicted backlash angle, it is possible to issue the command to reduce the torque of the motor 2 at an appropriate timing in advance. Thus, it is possible to appropriately reduce the actual torque of the motor 2 at the timing when the backlash elimination is completed and reliably reduce the shock during the backlash elimination.

In addition, according to the present embodiment, the control device 20 performs a correction for increasing the target torque before the predicted backlash angle becomes equal to the predetermined angle An1 and temporarily reduces the corrected target torque when the predicted backlash angle becomes equal to the predetermined angle An1. By performing a correction for increasing the target torque in this manner, it is possible to shorten the time for the backlash elimination and improve acceleration response.

In addition, according to the present embodiment, the control device 20 increases the target torque after the target torque is temporarily reduced. This makes it possible to promptly accelerate the vehicle after the completion of the backlash elimination.

In addition, according to the present embodiment, the control device 20 calculates the collision force (backlash elimination collision force) when backlash in the gears of the power transmission mechanism 4 is eliminated on the basis of the motor speed and the inertia of the motor 2 and temporarily reduces the target torque when the predicted backlash angle becomes equal to the predetermined angle An1 when the collision force is equal to or larger than the predetermined value. This makes it possible to perform control that temporarily reduces the torque only when the backlash elimination collision force is relatively large, that is, only when the shock during the backlash elimination is problematic.

In addition, according to the present embodiment, the control device 20 calculates the predicted backlash angle on the basis of transitions in the torsion angle of the drive shaft 9 and in the target torque. This makes it possible to accurately calculate the predicted backlash angle of the gears of the power transmission mechanism 4.

In addition, according to the present embodiment, the predetermined time used to calculate the predicted backlash angle is defined on the basis of the time delay from when the control device 20 issues the command for generating the target torque to the motor 2 to when the motor 2 actually generates the target torque. By reducing the target torque on the basis of the predicted backlash angle defined by such a predetermined time, it is possible to reliably reduce the actual torque of the motor 2 at the timing when the backlash elimination is completed.

### [Modification]

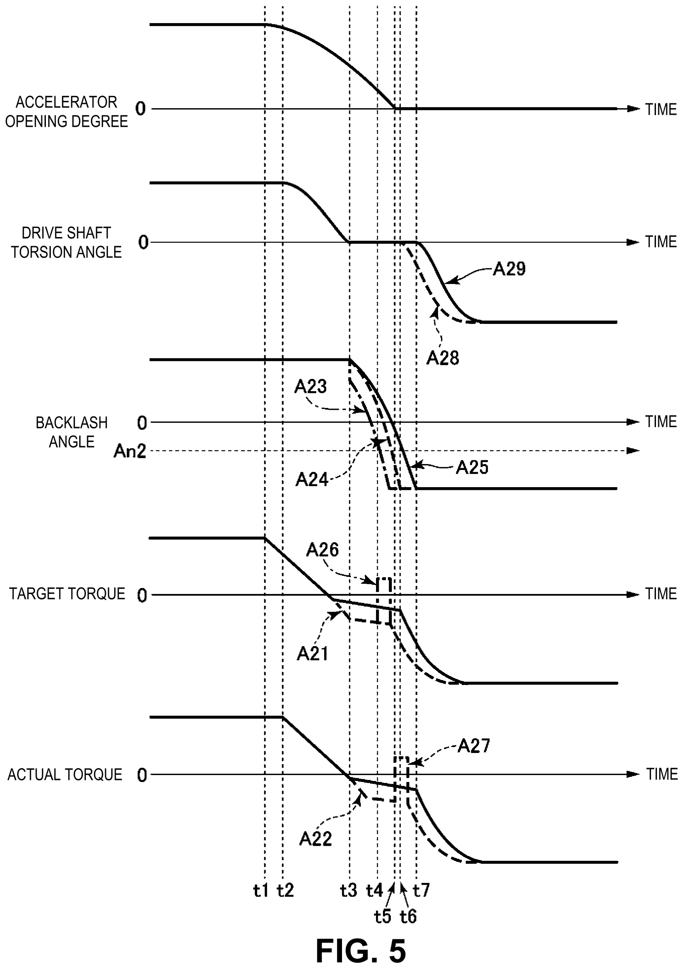

Although the above embodiment describes the backlash elimination control when the vehicle transitions from deceleration to acceleration, the backlash elimination control can also be performed in a similar manner when the vehicle transitions from acceleration to deceleration. A time chart showing backlash elimination control according to a modification of the present embodiment will be described with reference to FIG. 5. FIG. 5 shows, from top to bottom, the accelerator opening degree, the torsion angle of the drive shaft 9, the backlash angle of the gears of the power transmission mechanism 4 (combined backlash in the plurality of gears), the target torque of the motor 2, and the actual torque of the motor 2. Note that, in FIG. 5, a solid line indicates a temporal change in each parameter in basic backlash elimination control (partially including backlash elimination control according to a modification of the present embodiment), and a dashed line and a dot-dash line indicate temporal changes in characteristic parameters in the backlash elimination control according to the modification of the present embodiment. In particular, the dot-dash line indicates the predicted backlash angle and the temporarily increased target torque.

First, at time t1, the accelerator opening degree begins to decrease and the target torque begins to decrease along with this, and at time t2 immediately thereafter, the actual torque begins to decrease. Then, at time t3, backlash elimination in the gears of the power transmission mechanism 4 starts, that is, the backlash angle begins to change, and the torsion angle of the drive shaft 9 becomes zero during this change in the backlash angle. In the modification, in order to apply a relatively small torque during the backlash elimination to shorten the time for the backlash elimination, a correction for reducing the target torque is performed immediately before time t3 when the backlash elimination starts (arrow A21) such that the actual torque is reduced at time t3 (arrow A22). Specifically, a correction for lowering the level of the target torque overall by a predetermined torque (lowers the base) is performed. According to the modification with the target torque corrected in this manner, the change speed of the backlash angle becomes faster than in a case in which the target torque is not corrected (hereinbelow, referred to as a "comparative example") (refer to arrow A24 for the modification and arrow A25 for the comparative example).

In addition, in the modification, from time t3, the predicted backlash angle of the gears of the power transmission mechanism 4 after a predetermined time (e.g., 10 to 50 ms later) is calculated (arrow A23) on the basis of transitions in the torsion angle of the drive shaft 9 and in the target torque. Then, at time t4, when the predicted backlash angle reaches a predetermined angle An2 (a backlash angle relatively close to backlash elimination completion), the target torque is temporarily increased, specifically, the target torque is increased in a pulsed manner (arrow A26). For example, an amount of increase and an increase time of the target torque are set on the basis of the inertia of the motor 2 and the current motor speed such that the motor speed (rotational speed) when the backlash in the gears is eliminated will be temporarily brought to zero.

When the target torque is temporarily increased at time t4 as described above, the actual torque also temporarily increases at time t5 thereafter (arrow A27). Accordingly, at time t6 when the backlash elimination is completed (at this point, the actual backlash angle (arrow A24) becomes minimum), the actual torque is in an increased state. As a result, the shock during the backlash elimination is reduced. In addition, in the modification, at this time t6, the torsion angle of the drive shaft 9 decreases (arrow A28) because the backlash elimination is completed. On the other hand, in the comparative example, at time t7 after time t6, the torsion angle of the drive shaft 9 decreases (arrow A29). Thus, according to the modification, it can be said that the time for the backlash elimination is shorter and the deceleration response is higher than in the comparative example.

### [Reference Signs List]

- 1: engine
- 2: motor
- 3: transmission
- 4: power transmission mechanism
- 5: wheel (driving wheel)
- 9: drive shaft
- 20: control device
- 100: vehicle control system
- SN1: accelerator opening degree sensor
- SN2: vehicle speed sensor
- SN3: motor speed sensor

## Claims

1. A vehicle comprising:
a motor (2) that generates torque for driving a vehicle;
a power transmission mechanism (4) configured to transmit the torque of the motor (2) to a driving wheel (5) of the vehicle through a plurality of gears;
an accelerator opening degree sensor (SN1) that detects an accelerator opening degree, the accelerator opening degree being an amount of operation on an accelerator pedal of the vehicle; and
a control device (20) configured to calculate a target torque that should be generated from the motor (2) on the basis of at least the accelerator opening degree and control the motor (2) on the basis of the target torque, **characterized in that**
the control device (20) is configured to
calculate a predicted backlash angle of the gears of the power transmission mechanism (4) after a predetermined time when the vehicle switches from a deceleration state to an acceleration state, and temporarily reduce the target torque when the predicted backlash angle becomes equal to a predetermined angle; or
calculate a predicted backlash angle of the gears of the power transmission mechanism (4) after a predetermined time when the vehicle switches from an acceleration state to a deceleration state, and temporarily increase the target torque when the predicted backlash angle becomes equal to a predetermined angle.

2. The vehicle according to claim 1, further comprising a vehicle speed sensor (SN2) that detects a vehicle speed, and/or a motor speed sensor (SN3) that detects a motor speed, wherein
the control device (20) is configured to
calculate the target torque on the basis of at least the accelerator opening degree and the vehicle speed and/or the motor speed.

3. The vehicle according to any one of claims 1 to 2, wherein the control device (20) is configured to perform a correction for increasing the target torque before the predicted backlash angle becomes the predetermined angle and temporarily reduce the corrected target torque when the predicted backlash angle becomes equal to the predetermined angle.

4. The vehicle according to any one of claims 1 to 3, wherein the control device (20) is configured to increase the target torque after the target torque is temporarily reduced.

5. The vehicle according to any one of claims 1 to 4, wherein the control device (20) is configured to calculate a collision force when backlash in the gears of the power transmission mechanism (4) is eliminated on the basis of a rotational speed and an inertia of the motor (2), and when the collision force is equal to or larger than a predetermined value, to temporarily reduce the target torque when the predicted backlash angle becomes equal to the predetermined angle.

6. The vehicle according to any one of claims 1 to 5, wherein the control device (20) is configured to perform a correction for reducing the target torque before the predicted backlash angle becomes equal to the predetermined angle and temporarily increase the corrected target torque when the predicted backlash angle becomes equal to the predetermined angle.

7. The vehicle according to any one of claims 1 to 6, wherein the control device (20) is configured to reduce the target torque after the target torque is temporarily increased.

8. The vehicle according to any one of claims 1 to 7, wherein the control device (20) is configured to calculate a collision force when backlash in the gears of the power transmission mechanism (4) is eliminated on the basis of a rotational speed and an inertia of the motor (2), and when the collision force is equal to or larger than a predetermined value, to temporarily increase the target torque when the predicted backlash angle becomes equal to the predetermined angle.

9. The vehicle according to any one of claims 1 to 8, wherein the control device (20) is configured to calculate the predicted backlash angle on the basis of transitions in a torsion angle of a drive shaft to which the driving wheel (5) is coupled and in the target torque.

10. The vehicle according to any one of claims 1 to 9, wherein the predetermined time used to calculate the predicted backlash angle is defined on the basis of a time delay from when the control device (20) issues a command for generating the target torque to the motor (2) to when the motor (2) actually generates the target torque.
